Europäisches Patentamt

European Patent Office

Office européen des brevets

(19)

(11) EP 1 104 121 A1

## (12) EUROPEAN PATENT APPLICATION

(43) Date of publication:
30.05.2001 Bulletin 2001/22

(51) Int Cl.$^7$: H04B 7/08, H04B 1/707

(21) Application number: 99123314.9

(22) Date of filing: 23.11.1999

(84) Designated Contracting States:
AT BE CH CY DE DK ES FI FR GB GR IE IT LI LU MC NL PT SE
Designated Extension States:
AL LT LV MK RO SI

(71) Applicant: SIEMENS AKTIENGESELLSCHAFT
80333 München (DE)

(72) Inventors:
• Vejlgaard, Benny
9260 Gistrup (DK)
• Knudsen, Jasper
9210 Aalborg SO (DK)

### (54) Radio station for receiving signals employing antenna diversity and RAKE receiver

(57) The invention relates to a radio station for receiving signals. The radio station exhibits two antennas (1, 5) being spatially separated and a delay element (2). The received signals are received by the two antennas (1, 5). The signals received by one antenna (1) are delayed by the delay element (2), so that in a receiver (4) the signals are demodulated and combined to perform signal detection. For receiving the signals, a Rake receiver is used in the receiver (4) and the delay time of the delay element can be selected. The delay time itself must be greater than a channel excess time. In an embodiment of the invention, a semiconductor device is used as the delay element (2).

EP 1 104 121 A1

## Description

Prior art

The invention relates to a radio station for receiving signals in accordance with the generic class of the independent claim.

In William C. Jakes: Microwave Mobile Communications, IEEE Press, January 1994, pages 312 to 319, it is already described how radio signals received by spatially separated antennas using thereby antenna diversity are combined using selection diversity and maximal ratio combining.

Selection diversity demands a selection of the radio signal being received by one of the two spatially separated antennas. The radio signal with the largest signal power added to the noise power is selected to be processed by a receiving part of a radio station. Since the signal to noise ratio is very difficult to measure, a total power signal plus noise is used as the selection criterion.

In maximal ratio combining, the spatially separately received signals are weighted to again the signal plus noise power and then summed. The individual signals must be co-phased before combining them. Two receivers are here employed.

Advantages of the invention

The radio station for receiving signals having the characterising features of the independent patent claim has the advantage to lead to a low complex and low cost product, since only one receiver is used. In addition, digital combining leads to an improved accuracy and to a reduced complexity of the receiver. The invention provides an optimum use of spatial diversity.

The features of the dependent patent claims enable further improvements of the invention. It is advantage to set the delay time of the delay element greater than the channel excess time. Then, the delayed signal will not interfere with the original multipath components. This delay time increases the diversity and thereby improves the reception of the signal.

Furthermore, it is an advantage that a time period of twice the delay time is used for determining the time shifts of the multipath components, so that every multipath component is determined. This lead to an optimum use of the diversity scheme after the invention.

It is an advantage to use a Rake receiver for receiving code spreaded signals. A Rake receiver provides an excellent reception of the code spreaded signals propagating on multiple paths to the receiver. Therefore, a Rake receiver is predestined for mobile communications if CDMA (Code Division Multiple Access) is employed.

Furthermore, it is an advantage that the Rake receiver weights the output of each correlator. In this way, the detection of signals is improved. The weighting can consist of maximal ratio combining, of equal gain combining or other combining techniques.

Apart from this, it is an advantage that a delay element connected to one antenna of the radio station delays the received signals according to the surroundings where the radio station is employed. Therefore, the delay time is adapted to the peculiarities of the surroundings where the radio station is used, for example outdoor or indoor.

It is an advantage that the delay time of the delay element can be set either by the radio station itself to achieve high quality reception of radio signals or by the user who manually optimises the delay element for reception of radio signals.

Furthermore, it is an advantage that as the delay element a semiconductor device is used, since semiconductor devices offer a wide range of possibilities for designing the delay element. In this way, it is easy to provide a very small and cheap delay element for different environmental conditions with specially adapted delay timings.

Moreover, it is an advantage that a safety interval is included between transmitted data for avoiding interference of the data due to the delay element.

Additionally, it is an advantage that the radio station is also usable for transmitting radio signals. In this way, a wide use of the invention is possible.

Drawings

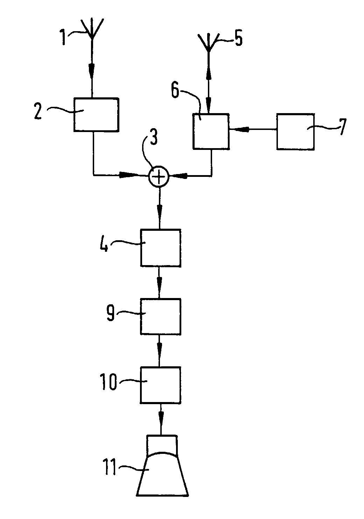

Exemplary embodiments of the invention are shown in the figures and elucidated in detail in the description below. Figure 1 shows a block diagram of a radio station using antenna diversity.

Description

In radio communications and especially in mobile communications, radio signals experience multipath propagation. Due to reflections at buildings, vehicles, hills and plants a large number of propagation paths for the radio signal exists. Frequency dependent attenuation of radio signals propagating over those propagation paths poses a problem for a receiver to reconstruct the signal. A technique to cope with multipath propagation is to employ diversity.

Diversity improves a wireless connection with relative simplicity. For diversity itself, no training signals are necessary, so that bandwidth is not employed for such training signals.

Diversity uses the random nature of radio signals by exploiting highly uncorrelated radio signal parts for communication. Thus, diversity employed by a receiver is shielded from a transmitter, since the transmitter does not know on which signal paths the transmitted radio signals propagate to the receiver.

The basic idea behind diversity is that if one signal path suffers heavily from fading, another signal path will probably lead to a strong signal. Consequently, by being able to select received signals from more than one signal path, an improved average signal-to-noise ratio is achieved than it would be possible by having only one signal path for reception. An improvement of 20 dB to 30 dB can easily be realised.

In this invention, spatial diversity which is also known as antenna diversity is used for a receiver in a mobile device such as a mobile phone. In antenna diversity, two antennas are separately placed at a receiver. It has been derived that the separation of the two antennas must be at least half a wavelength or more. For one gigahertz this means that a wavelength of thirty centimeters leads to a minimum separation of two antennas of fifteen centimeters. Due to the trend of moving in mobile communications to higher frequencies than one gigahertz a spatial separation of the two antennas will be easily achieved. Crucial for the success of antenna diversity is the combination and the selection of the individually received signals. Simply adding the signals received by the two antennas does not necessarily yield a diversity gain because of the uncorrelated phases of the two signals. The signals could cancel each other, so that instead of a gain, a loss would be obtained.

Code spreading techniques such as code division multiplex access (CDMA) are widely popular and will dominate the next generation of mobile communication transmission techniques. Code spreading means that digital narrow band signals are spreaded by a large bandwidth signal. This large bandwidth signal is a codeword. Thus, an information bit and the codeword give rise to a number of so-called chips. Thereby, the transmission rate is increased by the number of the chips. The number of the chips for one information bit corresponds to the number of bits in the codeword.

All users in a CDMA-system use the same frequency spectrum. Each user has its own codeword. The CDMA system should be designed in a way that a signal spreaded with one codeword should not interfere with another signal with another codeword. This behaviour is called orthogonality. CDMA saves frequency spectrum because many users use the same frequency spectrum. Furthermore, there is no absolute limit for the number of users in a radio cell since only noise increases linearly due to new users. Multipath fading, however, is reduced because the signal is spread over a large frequency spectrum, so that not the complete signal suffers from frequency selective fading.

A receiver structure normally used for CDMA reception is a Rake receiver. In multipath environments, such as it is the case for mobile communications, multiple versions of the transmitted signal are received by a receiver. By careful design of the codeword, these multiple versions of the transmitted signal are uncorrelated, so that equalisation can be avoided. A combination and, therefore, an addition of the time delayed versions of the same signal, however, leads to an improved reception of the signal itself. The Rake receiver exhibits so called Rake fingers having separate correlators, each finger being designed for the time shifted versions of the signal. The received signal is applied in parallel to all Rake fingers, so that at each correlator the same signal appears at the same time.

The correlators look for differently time shifted versions of the same signal and perform correlation on the differently time shifted versions of the signal by comparing the signal with time shifted versions of a used codeword. The time shift of each codeword at each correlator is mostly determined between a mobile communication using test signals between two stations, for example a base station and a mobile station but it is also monitored during a mobile communication to check whether the propagation conditions have changed. A time period extending to the maximally time shifted signal must be checked, so that all multipath components can be determined.

The test signal is code-spreaded by a transmitting station. The receiving station demodulates the test signal using differently time shifted codewords in a correlator. Those codewords with those time shifts which give rise to a high output signal of the correlator are selected for the demodulation in the individual Rake fingers, since these time shifted signals are received due to multipath propagation. In this way, the time-shifted codewords of the Rake fingers are dynamically adjusted in respect of their time shift. The difference between the time shifts in each Rake finger is at least one chip period.

Another method to determine the time shifts due to multipath propagation is to analyse an impulse response of the radio channel. The impulse response shows the time shift and the attenuation due to the radio channel. The multipath propagation behaviour gives rise to multiple peaks in the impulse response, each peak identifying a propagation path and thereby a time shift. The impulse response is determined using a training symbol in the radio signal and comparing this received training symbol with a stored training symbol. Thus, attenuation and time shifts are determined.

If a codeword in the received signal matches the codeword at the correlator, then a maximal output of the correlator occurs.

The outputs of each correlator are weighted, for example according to the signal strength of the output signal of each correlator. This is the maximal ratio combining method. If one time shifted signal is corrupted by fading the output signal of the correlator will experience a low weighting factor, so that this already low signal is further reduced. Consequently, it cannot exert a considerable influence on a signal detection.

Then, the individually weighted output signals of the correlators are co-phased, that means the time shift due to multipath propagation is eliminated, so that the signals in each Rake finger are added in phase in order to take advantage of the signal having propagated over different paths from a transmitter to the antennas of the receiver because only signals added in phase do not cancel out each other. This time shift is determined using a training symbol in the received signal. The training symbol and the data are sent in time multiplex, so that when the training symbol is there, the time shift is determined.

Another method of weighting is the equal gain combining. Here, the weighting of each output of the correlators is unity but the signals in each finger are co-phased. In addition, other combining methods can be implemented.

The correlation is a computational method performed in a processor where to signals are multiplied and a maximum output is achieved if the signals are equal.

Co-phasing means the alignment of the phase of the multipath components.

A channel excess time is a maximum delay time between a signal which has arrived at a receiver over the shortest path and a signal which has arrived over the longest path if multipath propagation happens, such as in mobile communications.

In figure 1, a block diagram of a radio station for receiving CDMA signals using antenna diversity after the invention is shown. An antenna 1 is used for reception of radio signals. The antenna 1 is separated at least by half a wavelength from another antenna 5 which is also used for reception but also for transmission of radio signals. The received radio signals by the antenna 1 are delayed by a delay element 2.

This delay element 2 is here a semiconductor bar. In the semiconductor bar, the transit time t is defined as $t = \frac{l}{v}$, where I is the length of the semiconductor bar and v the velocity of a charge carrier. The velocity v is defined as $v = m.\mu.e.E,$ where m is a mass of the charge carrier, $\mu$ is a mobility of the charge carrier, e is an electron charge and E is an applied electric field.

Thus, the velocity of the charge carrier and therefore the transit time can be altered by changing the applied electric field the mass and/or the mobility. The electric field is tuned by changing the applied voltage to the semiconductor bar. The mass and the mobility are changed by altering the doping level of the semiconductor bar.

Since the doping is only be performed once in the fabrication process of semiconductor bar, different semiconductor bar have to be produced to offer different transit times, if the doping level is chosen as the parameter to be changed. For indoor and outdoor applications, at least two different semiconductor bars have to be provided with two different transit times. This is valid for one given semiconductor material. By changing the semiconductor material a wide range of transit times can be achieved.

The delay time is greater than the channel excess time. Then, the delayed signal does not interfere with multipath components of the received signal, since the delay time is greater than the maximum delay time due to the longest propagation path. The actual values for the delay time are determined by simulations and field trials. For UMTS (Universal Mobile Telecommunication System) a delay time of 300 to 400 ns is sufficient for indoor applications and a few microseconds for outdoor applications.

UMTS is a standard for mobile communications for multimedia data transfer. It employs the code spreading technique.

The delayed signals are then transferred to an adder 3. The radio signals which are received by the antenna 5 propagate to a coupler 6 and then also to the adder 3. The coupler 6 is used to transfer signals coming from the transmission part 7 of the radio stations to the antenna 5, so that these signals can be transmitted by the antenna 5. The coupler 6 is designed, so that the received signals are not transferred to the transmission part 7 of the radio station.

Alternatively, both antennas can be used for transmission by introducing another coupler between the antenna 1 and the delay element 2. This coupler is then also connected to the transmission part 7, so that the signals from the transmitting part 7 are transferred to the antenna 1.

The adder 3 adds the signals coming from both antennas. The added signal is then transferred to a receiver 4. Here, the signals are amplified, filtered and down-converted in frequency to the baseband. Apart from this, the signals are digitised. A Rake receiver is also a part of the receiver 4. The baseband CDMA signals are divided into different fingers of the Rake receiver. The baseband is the frequency band occupied by the signal in modulation. The number of Rake fingers is increased as compared to a reception with only one antenna, since the delay element 2 introduces a second group of received signals which are time-shifted in respect to the signals received by the antenna 5.

In every Rake finger, a correlator is placed. This correlator compares the baseband CDMA signal with an appropriate codeword. The codeword of each correlator is time-shifted in respect to the other codewords, so that in each finger a differently time-shifted multipath component of the received signals gives a maximum output of the correlator in a certain finger because a phase shift of the codeword of that correlator corresponds to the time delay of that multipath component. In this way, the signals are demodulated and therefore code-despreaded since the codeword is removed from the signal. The time-shift of each codeword in each Rake finger is set according to the monitoring process described above. A time period twice the delay time must be monitored to find all multipath components received by the antennas.

Alternatively, the Rake receiver operates also on signals at intermediate frequencies, so that the downconversion to the baseband is not necessary.

After the correlation, the demodulated signals are weighted and co-phased as described above and then they are digitally combined using an adder in the Rake receiver. A training symbol in the received signals is used to obtain the phase shift due to multipath propagation. At the output of that adder being equal to the output of the receiver 4, a digital data stream is created.

To obtain a channel estimate of the signal path exhibiting the propagation characteristics of the signal path, such as attenuation and phase distortion, a training signal is added to the radio signals, so that using this known training signal the receiver 4 can estimate the channel for the individual signal path by comparing a received training signal with a stored training signal.

The data stream is transferred to the channel decoding 9 where error detection and error correction are performed using error detecting and error correcting codes added to the signals in the transmitter. Then, the signals move to the audio decoding 10, so that compressed audio data is converted to a digital signal stream that is processed and converted to audio signals and then converted to acoustical waves by a loud speaker 11. The processing and conversion of the digital signal stream is performed using signal processing electronics attached to the audio decoding 10.

In a transmitter, audio signals are converted by a microphone from mechanical waves to electrical signals. These electrical signals are amplified and digitised thereby creating a digital signal stream. To reduce the amount of data, sophisticated data compression codes removing redundancy from the digital signals are employed. Then, error detecting codes and/or error correcting codes are added to the signals, so that redundancy is added. In the receiver, a processor can calculate using this redundancy, whether there are errors in the received signals or not and when using error correcting codes the receiver can correct the errors in the received signals.

Alternatively, other data such as text, images and/or video can be received and displayed. Here, other data compression techniques are used.

In a further embodiment of the invention, a user of a mobile phone using the receiver of the invention sets manually the delay time of the delay element 2 according to the surrroundings the user is in at the moment.

Alternatively, the mobile phone can transmit a test signal and try to receive this test signal again. If the mobile phone can quickly receive the signal again, then a shorter delay must be set. If the mobile phone experiences problems in receiving the test signal at all, then a larger delay time of the delay element 2 is necessary because then not many reflections occur and the user is probably outdoor.

If it is known previously where the mobile phone will be employed, then a mobile phone with an appropriately fixed delay time can be used.

A safety interval between code-spreaded bits is included in an embodiment of the invention in order to avoid interference between the individual bits due to the delay time of the delay element. But even if some chips interfere with each other, the results are still acceptable. Therefore, the safety interval can be avoided.

## Claims

1. Radio station for receiving signals, demodulating the received signals using a code spreading technique with a codeword, using two antennas (1, 5) for receiving the signals, the signals exhibiting data and training symbols, using at least one antenna (5) of the two antennas for transmitting signals, characterised in that a delay element (2) delays the signals received by a first antenna (1) for a predefined delay time, that an adder (3) adds the delayed signals and the signals received by a second antenna (5), that the receiver (4) demodulates the added signals by comparing in parallel the added signals with time shifted versions of the codeword, that the receiver (4) aligns the phase of each signal by determining a phase shift of the signals using the training symbols and that the receiver (4) adds the signal with their phases aligned for signal detection.

2. Radio station according to claim 1 wherein the delay time is greater than a maximum channel excess time in a given environment.

3. Radio station according to claim 2 wherein the receiver (4) detects time shifts between multipath components of the added signals, the receiver (4) testing a time period of twice the delay time.

4. Radio station according to claim 3 wherein the receiver (4) exhibits a Rake receiver.

5. Radio station according to claim 4 wherein the Rake receiver weights an output of each correlator.

6. Radio station according to claim 5 wherein the delay element (2) delays the signals received by the first antenna (1) according to an application of the radio station.

7. Radio station according to claim 6 wherein the delay time by which the signals being received by the first antenna (1) are delayed is selectable.

8. Radio station according to claim 7 wherein the delay element (2) exhibits a semiconductor device for delaying the signals.

9. Radio station according to a precedent claim wherein a safety interval is included between data in the received signals.

10. Radio station according to a precedent claim wherein at least one antenna (5) of the said two an-

**EP 1 104 121 A1**

tennas (1, 5) is used for transmitting signals.

**European Patent Office**

**EUROPEAN SEARCH REPORT**

Application Number

EP 99 12 3314

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | KIYOHITO TOKUDA ET AL: "ANALYSIS OF A DISTRIBUTED ANTENNA SYSTEM AND ITS PERFORMANCE UNDER FREQUENCY SELECTIVE FADING" IEICE TRANSACTIONS ON COMMUNICATIONS,JP,INSTITUTE OF ELECTRONICS INFORMATION AND COMM. ENG. TOKYO, vol. E77-B, no. 5, 1 May 1995 (1995-05-01), pages 606-623, XP000540890 ISSN: 0916-8516 | 1-6,9,10 | H04B7/08 H04B1/707 |
| A | * page 606, right-hand column, line 4 - page 607, left-hand column, line 29 * <br> * page 607, right-hand column, line 27 - page 608, left-hand column, line 23; figure 1 * | 7,8 | |
| Y | ANDOH H ET AL: "PERFORMANCE OF PILOT SYMBOL-ASSISTED COHERENT ORTHOGONAL FILTER BASED RAKE RECEIVER USING FAST TRANSMIT POWER CONTROL FOR DS-CDMA MOBILE RADIO" IEICE TRANSACTIONS ON FUNDAMENTALS OF ELECTRONICS, COMMUNICATIONS AND COMPUTER SCIENCES,JP,INSTITUTE OF ELECTRONICS INFORMATION AND COMM. ENG. TOKYO, vol. E80-A, no. 12, 1 December 1997 (1997-12-01), pages 2455-2463, XP000768671 ISSN: 0916-8508 <br> * page 2455, left-hand column, line 1 - line 21 * <br> * page 2455, right-hand column, line 13 - line 42 * <br> * page 2456, left-hand column, line 13 - right-hand column, line 2; figures 1,2 * | 1-6,9,10 | TECHNICAL FIELDS SEARCHED (Int.Cl.7) H04B H04L |

-/--

The present search report has been drawn up for all claims

| Place of search | Date of completion of the search | Examiner |
|---|---|---|
| THE HAGUE | 31 March 2000 | Sieben, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 99 12 3314

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 942 540 A (TOKYO SHIBAURA ELECTRIC CO) 15 September 1999 (1999-09-15) <br> * abstract; figures 1,5,6 * <br> * column 1, line 29 - line 41 * <br> * column 3, line 12 - line 50 * <br> * column 8, line 45 - column 9, line 44 * <br> --- | 1-5 | |
| A | US 5 347 535 A (IWAI HISATO ET AL) 13 September 1994 (1994-09-13) <br> * abstract; figures 1,2,4,6 * <br> * column 1, line 36 - line 54 * <br> * column 3, line 33 - line 53 * <br> * column 4, line 42 - column 5, line 6; figure 3 * <br> * column 5, line 35 - line 62 * <br> * column 7, line 55 - line 64; figure 7 * <br> --- | 1-8,10 | |
| A | EP 0 887 949 A (LUCENT TECHNOLOGIES INC) 30 December 1998 (1998-12-30) <br> * abstract; figure 2 * <br> --- | 1-8 | |
| A | WO 98 52300 A (QUALCOMM INC) 19 November 1998 (1998-11-19) <br> * abstract; figures 4,5 * <br> * page 3, line 37 - page 4, line 36 * <br> * page 7, line 4 - line 5 * <br> * page 12, line 10 - page 13, line 2 * <br> --- | 1-8,10 | TECHNICAL FIELDS SEARCHED (Int.Cl.7) |
| A | US 5 940 454 A (MCNICOL JOHN DUNCAN ET AL) 17 August 1999 (1999-08-17) <br> * column 6, line 34 - column 7, line 14 * <br> ----- | 1,9 | |

The present search report has been drawn up for all claims

| Place of search | Date of completion of the search | Examiner |
|---|---|---|
| THE HAGUE | 31 March 2000 | Sieben, S |

EPO FORM 1503 03.82 (P04C01)

## ANNEX TO THE EUROPEAN SEARCH REPORT
## ON EUROPEAN PATENT APPLICATION NO.

EP 99 12 3314

This annex lists the patent family members relating to the patent documents cited in the above—mentioned European search report.
The members are as contained in the European Patent Office EDP file on
The European Patent Office is in no way liable for these particulars which are merely given for the purpose of information.

31-03-2000

| Patent document cited in search report | | Publication date | Patent family member(s) | | Publication date |
|---|---|---|---|---|---|
| EP 0942540 | A | 15-09-1999 | JP | 11261525 A | 24-09-1999 |
| US 5347535 | A | 13-09-1994 | JP | 5268128 A | 15-10-1993 |
| EP 0887949 | A | 30-12-1998 | CA | 2236315 A | 23-12-1998 |
|  |  |  | JP | 11088259 A | 30-03-1999 |
| WO 9852300 | A | 19-11-1998 | US | 6009307 A | 28-12-1999 |
|  |  |  | AU | 7480998 A | 08-12-1998 |
|  |  |  | ZA | 9804043 A | 20-11-1998 |
| US 5940454 | A | 17-08-1999 | NONE |  |  |

EPO FORM P0459

For more details about this annex : see Official Journal of the European Patent Office, No. 12/82